# EUROPÄISCHE PATENTSCHRIFT

(11) **EP 2 508 372 B1**
(45) Veröffentlichungstag und Bekanntmachung des Hinweises auf die Patenterteilung: **22.10.2014**
(21) Anmeldenummer: 12160502.6
(22) Anmeldetag: 21.03.2012
(51) Int. Cl.: B60H 1/00, B60R 13/02

(54) **Kraftfahrzeuginnenverkleidungsbauteil aus Kunststoff**
Plastic motor vehicle cladding component
Composant pour revêtement interne de véhicule automobile en plastique

(30) Priorität: 05.04.2011 DE 202011004899 U
(43) Veröffentlichungstag der Anmeldung: 10.10.2012
(73) Patentinhaber: SMP Deutschland GmbH, 79268 Bötzingen (DE)
(72) Erfinder: Johannböke, Eckhard, 79346 Endingen (DE); Klipfel, Michael, 79369 Wyhl (DE)
(74) Vertreter: Patentanwälte Westphal, Mussgnug & Partner

(56) Entgegenhaltungen:
- DE-A1- 19 924 270
- DE-A1-102006 050 533
- DE-A1-102008 045 757
- DE-A1-102008 047 291
- DE-A1-102008 047 690
- DE-U1- 20 003 365

## Beschreibung

Die vorliegende Erfindung betrifft ein im Wesentlichen aus Kunststoff bestehendes Innenverkleidungsbauteil für ein Kraftfahrzeug, insbesondere eine Instrumententafel, eine Tür- oder eine Seitenverkleidung.

Die Beheizung von Fahrzeuginnenräumen erfolgt üblicherweise über ein Belüftungssystem, bei dem mit Hilfe der bei laufendem Motor entstehenden Wärme der Fahrzeuginnenraum temperiert wird.

In der Patentliteratur sind alternative Lösungen beschrieben, Kraftfahrzeuginnenräume zu beheizen. So beschreibt die DE 100 29 095 C2 ein Verfahren zur emissionsfreien Beheizung von Kraftfahrzeuginnenräumen durch Einwirkung von elektromagnetischen Wellen (Mikrowellen) auf semileitfähige Organopolysiloxan-Elastomere und deren Umwandlung in Wärmeenergie. Dabei wirken die Mikrowellen auf im Elastomer eingebettete, elektrisch leitfähige Festkörperteilchen und erzeugen im Innern des Elastomerkörpers Wärmeenergie.

Die EP 1 386 177 B1 beschreibt eine Wärmesteuerung von Kraftfahrzeuginnenräumen mit Hilfe von Phasenveränderungsmaterial. Dabei sind ein erstes Phasenveränderungsmaterial im Dachhimmel, ein zweites Phasenveränderungsmaterial in den Sitzen und ein drittes Phasenverändarungsmaterial in der Instrumententafel eingebaut. Mit Hilfe der Phasenveränderungsmaterialien, die Schmelzpunkte in unterschiedlichen Temperaturbereichen zwischen 30°C und 43°C aufweisen, kann die Temperatur des Kraftfahrzeuginnenraumes gegenüber Temperaturschwankungen stabilisiert werden.

Die DE 10 2006 050 533 A1 beschreibt eine heizbare Innenraumverkleidung für eine Kraftfahrzeug. In ein Gewebe aus nichtleitenden Garnen werden spiralförmige Heizleiter eingearbeitet und die auf diese Weise entstehende Gewebestruktur zu einem beispielsweise dreidimensional geformten, formsteifen Karosserieverkleidungsteil weiterverarbeitet.

Die DE 10 2008 045 757 A1 offenbart Leiterbahnen, die aus einem Gemisch von Kunststoffmaterial und sogenannten Carbon-Nano-Tubes bestehen. Die Leiterbahnen werden in Kunststoffhäute eingebettet, um diese dann zu Innenverkleidungsteilen von Fahrzeugen weiterzuverarbeiten.

Die beiden erstgenannten Techniken haben bisher noch keinen Eingang in die Praxis gefunden.

Aufgabe der vorliegenden Erfindung ist es, eine Heizung für den Kraftfahrzeuginnenraum anzubieten, die Vorteile gegenüber dem Stand der Technik hat.

Gelöst wird diese Aufgabe durch ein Innenverkleidungsbauteil für ein Kraftfahrzeug mit den Merkmalen des Anspruchs 1. Vorteilhafte Ausgestaltungen und Weiterentwicklungen der vorliegenden Erfindung sind Gegenstand der Unteransprüche.

Die vorliegende Erfindung basiert auf der Idee, Oberflächen im Kraftfahrzeuginnenraum, die bisher lediglich visuellen oder haptischen Anforderungen genügen mussten, mit einer weiteren, thermischen Funktion zu belegen. Gedacht ist dabei insbesondere an großflächige, glatte Kunststoffoberflächen, wie sie bspw. bei einer Instrumententafel, einer Türinnenverkleidung oder sonstigen Innenverkleidungsbauteilen zu finden sind.

Weiter sind auch genarbte Oberflächen möglich. Als weitere Innenraumteile kommen z.B. der Handschuhkastendeckel, das Lenkrad, Fußraumverkleidungen, Mittelkonsole-Verkleidungen, Armlehnen, Türspiegel oder Zuziehgriffe in Frage.

Ziel der vorliegenden Erfindung ist es insbesondere auch, den Komfort im Innenraum des Fahrzeuges zu verbessern.

Dies gelingt durch ein im Wesentlichen aus Kunststoff bestehendes Innenverkleidungsbauteil für ein Kraftfahrzeug, wobei mindestens ein Teilbereich der Oberfläche des Innenverkleidungsbauteils beheizbar und die Temperatur des Teilbereichs der Bauteiloberfläche regelbar ist. So wird die Erwärmung einer Instrumententafel, einer Türbrüstung, einer Armlehne oder einer Seitenverkleidung, wobei eine Strahlungswärme unterhalb der Körpertemperatur emittiert wird, als äußerst wohltuend empfunden.

Es wurde gefunden, dass sämtliche im Kraftfahrzeuginnenausbau verwendeten Kunststoffoberflächen für eine zusätzliche thermische Funktion geeignet sind. So können erfindungsgemäß spritzgegossene Dekoroberflächen, Folien, Formhäute, wie z. B. Slush-Häute, Sprühhäute, Gießhäute oder Solid-Häute, aber auch Trägeroberflächen, die nicht direkt an den Innenraum eines Kraftfahrzeuges angrenzen, mit einer thermischen Funktion belegt werden.

Die Wärmeleitung erfolgt dann über den Träger in die Dekoroberfläche hinein. Desweiteren können auch Zwischenschichten zwischen Dekor- und Trägerteil leitfähig sein. Dies können z.B. PU(R)-Schaum oder polyolefinische Schäume sein. Ebenso können dies Kleberschichten (z.B. Hotmelt, Dispersion,...) sein oder auch partielle Kleberaupen.

Die thermische Funktion wird erfindungsgemäß dadurch realisiert, dass entweder der mindestens eine beheizbare und thermisch regelbare Teilbereich der Kunststoffoberfläche des Innenverkleidungsbauteils selber elektrisch leitend ist, oder dass das Innenverkleidungsbauteil mindestens einen elektrisch leitenden Bereich umfasst, der in unmittelbarer Nachbarschaft zu dem mindestens einen beheizbaren und thermisch regelbaren Teilbereich der Oberfläche des Innenverkleidungsbauteils angeordnet ist.

Die elektrische Leitfähigkeit dieses Teilbereiches kann auf unterschiedliche Weise realisiert werden. So werden mit Carbon-Nano-Tubes gefüllte Kunststoffpasten oder Lacksysteme, mit Carbon-Nano-Tubes versetzte spritzgegossene Bauteile oder auch Kombinationen von zwei oder mehreren der oben genannten Systeme eingesetzt, um eine elektrische Leitfähigkeit zu realisieren.

Besonders vorteilhafte elektrische Eigenschaften ergeben sich durch den Einsatz der Carbon-Nano-Tubes. Dabei handelt es sich um mikroskopisch kleine röhrenförmige Gebilde aus Kohlenstoff (Kohlenstoffnanoröhren), die aus wabenförmig strukturierten Kohlenstoffatomen aufgebaut sind. Je nach Aufbau der Struktur besitzen die Carbon-Nano-Tubes metallische Leitfähigkeit oder Halbleitereigenschaften. Darüber hinaus besitzen die Carbon-Nano-Tubes eine außerordentlich hohe Wärmeleitfähigkeit und eine extrem hohe Zugfestigkeit. Durch Mischen der Carbon-Nano-Tubes mit Kunststoffen lassen sich die Eigenschaften von Kunststoffen verändern und verbessern. So können die mechanischen, elektrischen und thermischen Eigenschaften von Kunststoffen durch Beimischungen von Carbon-Nano-Tubes optimiert werden und es ist möglich, elektrisch leitende Kunststoffe herzustellen.

Die Carbon-Nano-Tubes können direkt in das Spritzgußmaterial eincompoundiert werden oder an der Maschine zugeführt werden z.B. als Masterbatch oder Pulver.

Im Zusammenhang mit der vorliegenden Erfindung können die Carbon-Nano-Tubes auf unterschiedliche Weise eingesetzt werden. Beispielsweise können entsprechende leitfähige Bereiche durch das Auftragen von mit Carbon-Nano-Tubes gefüllten Kunststoffpasten oder Lacksystemen erhalten werden. Es können auch direkt mit Carbon-Nano-Tubes versetzte spritzgegossene Bauteile eingesetzt werden, wobei diese wiederum als Einkomponenten-Spritzgussteile eingesetzt werden können, wobei die gesamte Wanddicke des Bauteils mit Carbon-Nano-Tubes versetzt und somit leitfähig ist. Diese Variante ist jedoch relativ teuer. Günstigere Bauteile kann man dadurch erhalten, dass in einem Zweikomponenten-Spritzguss der leitende Bereich mit den integrierten Carbon-Nano-Tubes mit einer minimaler Wanddicke vergossen wird oder partiell gespritzt. Eine weitere Möglichkeit zum Einsatz der Carbon-Nano-Tubes besteht darin, dass die heiße, mit Carbon-Nano-Tubes versetzte Kunststoffschmelze in Nuten in einem Trägermaterial eingegossen wird, wobei die Nuten z.B. schlangenförmig in dem zu beheizenden Teilbereich angeordnet sind.

Weitere Möglichkeiten zum Einsatz von Carbon-Nano-Tubes im Rahmen der vorliegenden Erfindung bestehen darin, die Carbon-Nano-Tubes direkt in Folien oder in die Materialien für Formhäute (Slush-, Solid-, Spritz-, Sprüh-Häute) einzumischen und diese dann entsprechend einzusetzen, sodass leitfähige Oberflächen entstehen.

Zusätzlich kann bei den Slush-Häuten und Spritzgussteilen der Stromfluss gezielt durch eine unterschiedliche Wanddicke des leitfähigen Bereiches gesteuert werden, womit dann auch "spitz" zulaufende Flächen regelbar und kontrolliert erwärmt werden können. So kann beispielsweise durch eine kontinuierliche Reduzierung der Wanddicke der Widerstand einer sich verkleinernden Fläche erhöht werden.

Bei Slush-Häuten, die aus mehreren Schichten bestehen, können gezielt bestimmte Schichten leitfähig gestaltet werden, so dass beispielsweise die oberste Schicht unverändert ist, während eine direkt darunterliegende Schicht leitfähig ausgelegt wird, was den Vorteil hat, dass als obere Schicht ein bekanntes und erprobtes Material eingesetzt werden kann, das die leitfähige Schicht abdeckt und schützt. Ein weiterer Vorteil ist, dass auf diese Weise Kosten für teuren, Carbon-Nano-Tubes enthaltenden Füllstoff eingespart werden können.

Die jeweilige Kontaktierung der elektrisch beheizten Flächen hängt von dem jeweiligen eingesetzten System ab, wobei bei den konventionellen Systemen auf bekannte Möglichkeiten zurückgegriffen werden kann. Alternativ können zur Kontaktierung auch Carbonfaser-Geflechte oder -Rowings verwendet werden. Im Folgenden soll daher im Detail ausschließlich auf die Carbon-Nano-Tubes enthaltenden Systeme eingegangen werden. So muss beispielsweise bei der Verwendung von mit Carbon-Nano-Tubes gefüllten Kunststoffpasten oder Lacksystemen eine gleichmäßige Schichtdicke aufgetragen werden, was bei planen Flächen einfach zu realisieren ist, wobei die Kontaktierung beispielsweise über ein geklebtes Metallband erfolgen kann. Bei mit Carbon-Nano-Tubes gefüllten Einkomponenten-Spritzgussteilen kann die Kontaktierung über entsprechend ausgelegte Angüsse erfolgen. Das Gleiche gilt für den Zweikomponenten-Spritzguss. Auch hier können entsprechende Angüsse bei der Fertigung des Bauteils vorgesehen werden. Weitere Kontaktierungsmöglichkeiten bei mit Carbon-Nano-Tubes versetzten elektrisch leitenden Flächen können durch den Einsatz von Kupfergeflechten oder Kupferlitzen erfolgen, die parallel an gegenüberliegenden Seiten der leitenden Flächen angeordnet sind.

Eine besonders interessante Anwendung der erfindungsgemäßen Innenverkleidungsbauteile ergibt sich für Instrumententafeln oder Seitenverkleidungen, die einen Airbagbereich verdecken. Durch Beheizen dieses Teilbereiches kann man ein deutlich verbessertes Öffnungsverhalten der Airbagabdeckung realisieren, wobei das bei niedrigen Temperaturen gefürchtete Splittern vermieden werden kann. Durch das Beheizen des Airbagöffnungsbereiches wird das Öffnen der Airbagabdeckung allgemein erleichtert, was bei der Gestaltung der Airbagöffnung, insbesondere auch bei der Airbagschwächung, berücksichtigt werden kann, sodass die Airbagschwächung selber weniger stark ausgeprägt sein muss, was optische Vorteile mit sich bringen kann. Selbstverständlich kann nicht nur ein Teilbereich, sondern auch die gesamte Instrumententafel beheizt werden.

Im Folgenden wird die vorliegende Erfindung anhand von Figuren zusätzlich erläutert.

Dabei zeigt
- Fig. 1: eine Draufsicht auf eine Instrumententafel und
- Fig. 2: eine Schnittdarstellung der Instrumententafel aus Fig. 1.

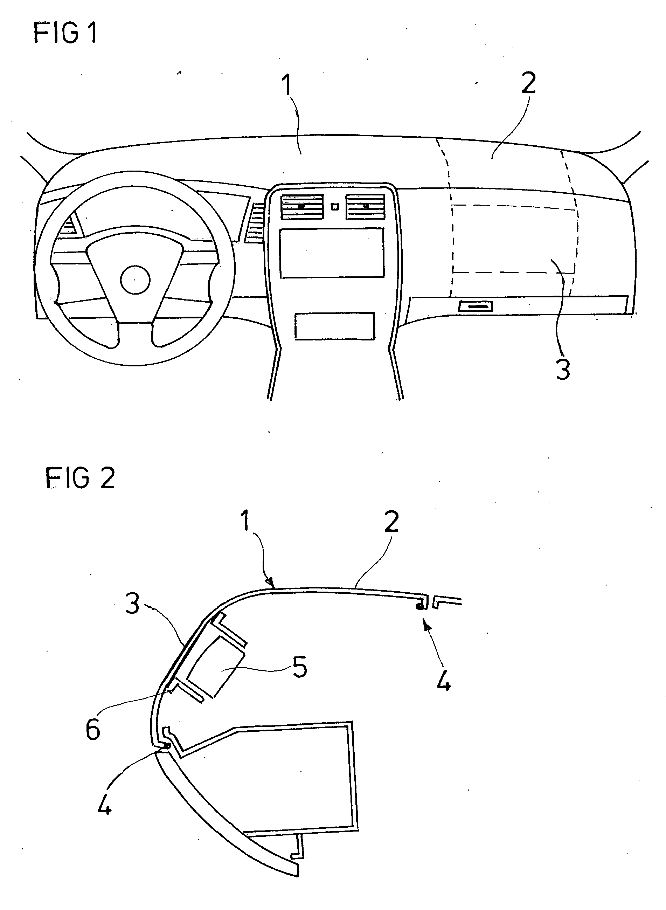

Der Figur 1 ist eine Instrumententafel 1 in der Draufsicht zu sehen, die einen beheizbaren Teilbereich 2 aufweist, der unter anderem auch den Airbagöffnungsbereich 3 abdeckt. In der Figur 2 ist die Instrumententafel 1 aus Figur 1 vergrößert als Querschnitt dargestellt. Am oberen und unteren Randbereich der Instrumententafel 1 sind Kontaktierungen 4 zu erkennen. Der beheizbaren Teilbereich 2 der Instrumententafel 1 erstreckt sich über die Höhe der Instrumententafel 1 zwischen den zwei Punkten der Kontaktierungen 4 und deckt damit auch den Airbagöffnungsbereich 3 ab. Der Airbag ist mit dem Bezugszeichen 5 gekennzeichnet und der Schusskanal weist das Bezugszeichen 6 auf.

Prinzipiell können für die in den Figuren 1 und 2 gezeigte Instrumententafel sämtliche eingangs genannten Heizsysteme eingesetzt werden. Besonders vorteilhaft sind jedoch in diesem Fall auch wiederum die mit Carbon-Nano-Tubes versetzten Kunststoffe, wobei dieses Heizsystem in einem Einkomponenten-Spritzgussteil, einem Zweikomponenten-Spritzgussteil oder auch durch direkt in die Oberflächenhaut eingelagerte Carbon-Nano-Tubes realisiert werden kann.

Die vorliegende Erfindung ist selbstverständlich nicht auf Instrumententafeln oder Seitenverkleidungen beschränkt, sondern es können sämtliche Innenverkleidungsbauteile mit entsprechenden Heizflächen versehen werden, wobei der für die Beheizung erforderliche Strom üblicherweise über die Fahrzeugbatterie geliefert wird. Eine besonders vorteilhafte Ausgestaltung der vorliegenden Erfindung sieht vor, dass der Strom über Solarpanels geliefert wird, die entweder im Außenbereich des Kraftfahrzeugs angeordnet sind oder auch im Innenraum des Kraftfahrzeugs, wie bspw. auf einer Ablage im Heckbereich des Kraftfahrzeugs. Die Temperaturregelung erfolgt zweckmäßig über Spannungsänderungen und kann stufenweise oder stufenlos erfolge.

### Bezugszeichenliste

- 1: Instrumententafel
- 2: heizbarer Teilbereich
- 3: Airbagabdeckung
- 4: Kontaktierung
- 5: Airbag
- 6: Schusskanal

## Patentansprüche

1. Im Wesentlichen aus Kunststoff bestehendes Kraftfahrzeuginnenverkleidungsbauteil, wobei mindestens ein Teilbereich der Oberfläche des Innenverkleidungsbauteils beheizbar und die Temperatur des mindestens einen Teilbereichs der Bauteiloberfläche regelbar ist,
**dadurch gekennzeichnet, dass** der mindestens eine beheizbare und thermisch regelbare Teilbereich des Innenverkleidungsbauteils elektrisch leitend ist, oder
das Innenverkleidungsbauteil mindestens einen elektrisch leitenden Bereich umfasst, der in unmittelbarer Nachbarschaft zu dem mindestens einen beheizbaren und thermisch regelbaren Teilbereich der Oberfläche des Innenverkleidungsbauteils angeordnet ist,
und dass
die elektrische Leitfähigkeit des mindestens einen elektrisch leitenden Bereichs auf
a.) mit Carbon-Nano-Tubes gefüllten Kunststoffpasten oder Lacksystemen,
b.) mit Carbon-Nano-Tubes versetzten spritzgegossenen Bauteilen oder
c.) einer Kombination von zwei oder mehreren der unter a.) bis b.) genannten Systemen
basiert.

2. Innenverkleidungsbauteil nach Anspruch 1,
**dadurch gekennzeichnet, dass**
die Oberfläche aus Kunststoff eine spritzgegossene Dekoroberfläche, eine Folie, eine Formhaut, wie z.B. eine Slush-Haut, eine Spritzgusshaut, eine Sprühhaut, eine Gießhaut oder eine Solid-Haut, oder auch eine Trägeroberfläche ist, die nicht direkt an den Innenraum des Kraftfahrzeugs angrenzt.

3. Innenverkleidüngsbauteil nach Anspruch 1 oder 2,
**dadurch gekennzeichnet, dass**
die Oberfläche aus Kunststoff insbesondere glatt oder genarbt ist.

4. Innenverkleidungsbauteil nach einem der Ansprüche 1 bis 3,
**dadurch gekennzeichnet, dass**
auch Zwischenschichten zwischen Dekor- und Trägerteil leitfähig sind, wobei die Zwischenschichten insbesondere aus Schäumen oder Kleber bestehen.

5. Innenverkleidungsbauteil nach einer der Ansprüche 1 bis 4,
**dadurch gekennzeichnet, dass**
die mit Carbon-Nano-Tubes versetzten Bauteile
a) Einkomponenten-Spritzgussteile,
b) Zwei- oder Mehr-Komponenten-Spritzgussteile oder
c) mit leitfähigen, mit Carbon-Nano-Tubes versetzten Strängen versehene Spritzgussteile sind.

6. Innenverkleidungsbauteil nach einem der Ansprüche 1 bis 5,
**dadurch gekennzeichnet, dass**
die elektrische Leitfähigkeit des mindestens einen elektrisch leitfähigen Bereiches auf einer direkten Einarbeitung von Carbon-Nano-Tubes in Folien-, Formhaut-, Slush-Haut-, Spritzgusshaut-, Solid- oder Sprühmaterial basiert.

7. Innenverkleidungsbauteil nach einem der Ansprüche 1 bis 6,
**dadurch gekennzeichnet, dass** der mindestens eine beheizbare Teilbereich des Innenverkleidungsbauteils einen Airbagbereich umfasst.

8. Innenverkleidungsbauteil nach einem der Ansprüche 1 bis 7,
**dadurch gekennzeichnet, dass**
die Erwärmung des mindestens einen heizbaren Teilbereichs elektrisch erfolgt, wobei von Solarpanels oder der Fahrzeugbatterie gelieferter Strom über eine dem elektrisch leitenden Bereich angepasste Kontaktierung durch den elektrisch leitenden Bereich geleitet wird, wobei die Temperaturregelung des mindestens einen beheizbaren Teilbereichs über Spannungsänderungen erfolgt.

## Claims

1. An interior lining component of a motor vehicle consisting substantially of plastics material, wherein at least one portion of the surface of the interior lining component is capable of being heated and the temperature of the at least one portion of the surface of the component is capable of being regulated, **characterized in that** the at least one portion of the interior lining component capable of being heated and thermally regulated is electrically conductive, or the interior lining component comprises at least one electrically conductive area which is arranged in the immediate vicinity of the at least one portion of the surface of the interior lining component capable of being heated and thermally regulated, and the electrical conductivity of the at least one electrically conductive area is based upon
a) plastics material pastes or paint systems filled with carbon nanotubes,
b) injection-moulded components charged with carbon nanotubes, or
c) a combination of two or more of the systems named under a) to b).

2. An interior lining component according to claim 1, **characterized in that** the surface of plastics material adjoins an injection-moulded decorative surface, a film, a moulded skin, such as for example a slush skin, an injection-moulded skin, a spray skin, a cast skin or a solid skin, or is also a carrier surface which does not directly adjoin the interior of the motor vehicle.

3. An interior lining component according to claim 1 or 2, **characterized in that** the surface of plastics material is, in particular, smooth or grained.

4. An interior lining component according to any one of claims 1 to 3, **characterized in that** intermediate layers between the decorative part and the carrier part are also conductive, wherein the intermediate layers consist, in particular, of foams or adhesive.

5. An interior lining component according to any one of claims 1 to 4, **characterized in that** the components charged with carbon nanotubes are
a) single-component injection-moulded parts,
b) two- or multiple-component injection-moulded parts or
c) injection-moulded parts provided with conductive strands charged with carbon nanotubes.

6. An interior lining component according to any one of claims 1 to 5, **characterized in that** the electrical conductivity of the at least one electrically conductive area is based upon a direct incorporation of carbon nanotubes into film, moulded-skin, slushskin, injection-moulded-skin, solid or spray material.

7. An interior lining component according to any one of claims 1 to 6, **characterized in that** the at least one portion of the interior lining component capable of being heated comprises an airbag area.

8. An interior lining component according to any one of claims 1 to 7, **characterized in that** the heating of the at least one portion capable of being heated is carried out electrically, wherein current supplied by solar panels or the vehicle battery is conducted through the electrically conductive area by way of a contacting adapted to the electrically conductive area, wherein the temperature regulation of the at least one portion capable of being heated is carried out by way of changes in voltage.

## Revendications

1. °) Composant de revêtement interne de véhicule automobile essentiellement constitué de matériau synthétique, au moins une zone partielle de la surface du composant de revêtement interne pouvant être chauffée et la température de cette zone partielle de la surface du composant étant réglable,
**caractérisé en ce que**
la zone partielle pouvant être chauffée et réglable en température du composant de revêtement interne est électriquement conductrice, ou
le composant de revêtement interne renferme au moins une zone électriquement conductrice qui est au voisinage immédiat de la zone partielle pouvant être chauffée et réglable en température de la surface du composant de revêtement interne, et
la conductivité électrique de la zone électriquement conductrice est basée sur :
a.) des pates de matériau synthétique ou des systèmes de vernis remplis de nanotubes de carbone,
b.) des composants moulés par injection mélangés à des nanotubes de carbone, ou
c.) une combinaison de deux ou d'un plus grand nombre de systèmes selon a.) et b.).

2. °) Composant de revêtement interne conforme à la revendication 1,
**caractérisé en ce que**
la surface en matériau synthétique est une surface décorative moulée par injection, une feuille, une peau de cuisson telle que par exemple une peau obtenue par slush moulding, une peau moulée par injection, une peau obtenue par pulvérisation, une peau de coulée ou une peau solide ou également une surface support qui n'est pas directement limitrophe de l'habitacle interne du véhicule automobile.

3. °) Composant de revêtement interne conforme à la revendication 1 ou 2,
**caractérisé en ce que**
la surface en matériau synthétique est en particulier lisse ou grainée.

4. °) Composant de revêtement interne conforme à l'une des revendications 1 à 3,
**caractérisé en ce que**
des couches intermédiaires situées entre la partie décorative et la partie support sont également conductrices, ces couches intermédiaires étant en particulier réalisées en mousse ou en un adhésif.

5. °) Composant de revêtement interne conforme à l'une des revendications 1 à 4,
**caractérisé en ce que**
les composants mélangées à des nanotubes de carbone sont :
a) des éléments moulés par injection mono-composant,
b) des éléments moulés par injection bi ou multi composants, ou
c) des éléments moulés par injection comportant des cordons mélangés à des nanotubes de carbone.

6. °) Composant de revêtement interne conforme à l'une des revendications 1 à 5,
**caractérisé en ce que**
la conductivité électrique de la zone électriquement conductrice est basée sur une incorporation directe de nanotubes de carbone dans un matériau en feuille, en peau de cuisson, en peau obtenue par slush moulding pâteuse, en peau moulée par injection, en matériau solide ou en matériau obtenu par pulvérisation.

7. °) Composant de revêtement interne conforme à l'une des revendications 1 à 6,
**caractérisé en ce que**
la zone partielle pouvant être chauffée du composant de revêtement interne comprend une zone d'airbag.

8. °) Composant de revêtement interne conforme à l'une des revendications 1 à 7,
**caractérisé en ce que**
le chauffage de la zone partielle pouvant être chauffée est effectué par voie électrique, le courant fourni par des panneaux solaires ou par la batterie du véhicule étant transmis à la zone électriquement conductrice, par l'établissement d'un contact adapté à cette zone la régulation de la température de la zone partielle pouvant être chauffée étant effectuée par des variations de tension.
